# EUROPEAN PATENT APPLICATION

(11) **EP 1 363 465 A2**
(43) Date of publication of application: **19.11.2003**
(21) Application number: 03009888.3
(22) Date of filing: 15.05.2003
(51) Int. Cl.: H04Q 3/00

(54) **Triggerless call type blocking system and method in a telecommunications network**

(30) Priority: 15.05.2002 US 378038 P
(71) Applicant: ALCATEL, 75008 Paris (FR)
(72) Inventor: Lopes, Vincente Melillo de Souza, Plano, TX 75023 (US); O'Toole, Maureen Rose, Plano, Texas 75025 (US); Bhardwaj, Ramesh K., Plano, TX 75023 (US)
(74) Representative: Dreiss, Fuhlendorf, Steimle & Becker

(57) **Abstract**

A Triggerless Call Type Blocking (TCTB) system and method in a telecommunications network. Upon intercepting an incoming signaling message received at an STP on a selected linkset, a database provided with the STP is queried based on subscriber number information in the incoming message. Service logic at STP is operable to provide call treatment, including termination, based on the results obtained from the database.

## Description

### Technical Field of the Invention

The present invention generally relates to telecommunications networks. More particularly, and not by way of any limitation, the present invention is directed to a triggerless call blocking system and method in a telecommunications network.

### Description of Related Art

Today, network operators have to contend with a variety of scenarios that pose significant challenges: rapid technological evolution, access to network by fraudulent users, diverse switching service providers, smuggling of international dialing services, lack of Signal Switching Point (SSP) functionality at most local switches, steady shrinkage of paying subscriber base, and ever-increasing competition, just to name a few. To address the concerns that arise from such challenges, network operators need a multitude of advanced network controls such as, for example, selective network access, real-time call validation, selective call blocking, filtering of illegal destinations, control of out-of-network customers, and the like. Current solutions in this regard, however, require costly upgrades in infrastructure in addition to having to deal with different technologies and vendors. Furthermore, service provisioning models in use today utilize a trigger-based approach to access advanced call processing capabilities which necessitates interaction with additional network elements possibly operated by third-parties.

### SUMMARY OF THE INVENTION

Accordingly, the present invention advantageously provides a Triggerless Call Type Blocking (TCTB) service in a telecommunications network that overcomes these and other shortcomings and disadvantages. Upon intercepting an incoming signaling message received at a Signal Transfer Point (STP) on a selected linkset, a database provided with the STP is queried based on subscriber number information in the incoming message and the Call Type. Service logic at STP is operable to provide call treatment, including call termination, based on the results obtained from querying the database.

In one aspect, the present invention is directed to a TCTB method operable to be effectuated in a telecommunications network. An incoming signaling message received at an STP on a selected linkset is intercepted based on whether the selected linkset has been provisioned for the TCTB service. In general, the incoming signaling message is generated pursuant to a call originated by a calling party towards a called party. Thereafter, a database associated with the STP is queried based on a subscriber parameter contained in the incoming signaling message. In one exemplary embodiment, the subscriber parameter may comprise the calling party's directory number. In another embodiment, the subscriber parameter may comprise the called party's directory number. Depending on the results obtained from the database responsive to the foregoing querying operation, a particular call treatment is effectuated by the STP. For instance, the call may be terminated, re-routed to a call center, or forwarded to an announcement system.

In another aspect, the present invention is directed to a TCTB system operable to be effectuated in a telecommunications network. A structure is provided for intercepting an incoming signaling message received at an STP node on a selected linkset, depending on whether the selected linkset has been provisioned for the TCTB service. If so, another structure is activatable for querying a database associated with the STP based on a subscriber parameter contained in the incoming signaling message. Depending on the results obtained from the database responsive to the foregoing querying operation, a particular call treatment, e.g., call termination, may be effectuated by the STP. In one embodiment, the various structures set forth above may comprise software, firmware, hardware, or any combination thereof, that is executable by one or more processors associated with the STP node.

In yet another aspect, the present invention is directed to a Flexible Routing application system associated with an STP node for effectuating a TCTB service in a telecommunications network. A message filter is provided for intercepting and examining incoming Message Transfer Part (MTP) messages on selected linksets associated with the STP node. Based upon examination, a message distributer is operable to distribute a particular MTP message to a TCTB service handler upon determining that the particular MTP message is received on a linkset enabled for the TCTB service. A database is operable to be queried by the TCTB service handler based on a subscriber number parameter associated with the particular MTP message and its Call Type. Service logic provided with the TCTB service handler effectuates call treatment with respect to the particular MTP message based on a result obtained from the database responsive to a querying operation, e.g., call termination, re-routing, et cetera.

### BRIEF DESCRIPTION OF THE DRAWINGS

A more complete understanding of the present invention may be had by reference to the following Detailed Description when taken in conjunction with the accompanying drawings wherein:
FIG. 1 depicts an embodiment of a Flexible Routing application architecture for effectuating a Triggerless Call Type Blocking (TCTB) system and method in accordance with the teachings of the present invention;
FIG. 2 depicts a flow chart of the various operations of an embodiment of a method of the present invention;
FIG. 3A depicts an exemplary embodiment of a scheme for treating an incoming IAM message in accordance with the teachings of the present invention;
FIG. 3B depicts a flow chart of the various operations of another embodiment of a method of the present invention;
FIG. 4 depicts a flow chart of the various operations of an embodiment of a database query method for use in conjunction with the teachings of the present invention;
FIG. 5 depicts a flow chart of the various operations of an embodiment of an address analysis method for use in conjunction with the teachings of the present invention; and
FIG. 6 depicts an exemplary embodiment of a telecommunications network portion for effectuating a Triggerless Call Type Blocking (TCTB) system and method in accordance with the teachings of the present invention.

### DETAILED DESCRIPTION OF THE DRAWINGS

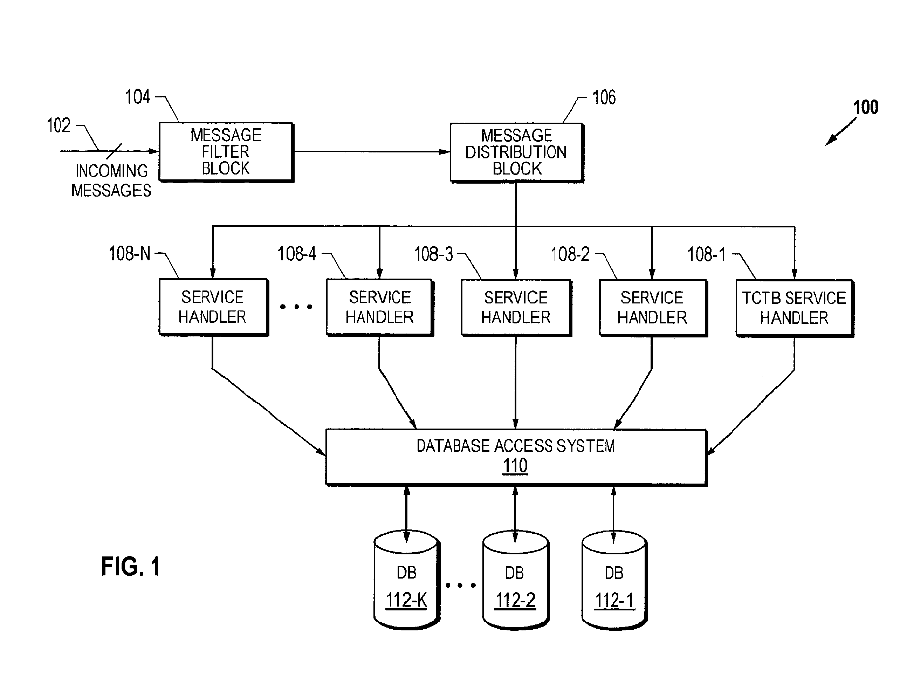

In the drawings, like or similar elements are designated with identical reference numerals throughout the several views thereof, and the various elements depicted are not necessarily drawn to scale. Referring now in particular to FIG. 1, depicted therein is an embodiment of a Flexible Routing (FR) application architecture 100 for effectuating a Triggerless Call Type Blocking (TCTB) service system and method in accordance with the teachings of the present invention. For purposes of the present patent application, the exemplary FR application architecture embodiment 100 is integrated as part of a Signal Transfer Point (STP) node disposed on a signaling network portion of a telecommunications network (not shown). As will be seen below, the FR application architecture embodiment 100 is operable to provide for targeted routing of messages within the signaling network, preferably by means of a series of message filtration algorithms, specific routing logic blocks associated with various service handlers, and one or more databases that contain route-specific data on a subscriber-by-subscriber basis, for effectuating the TCTB service.

A message filter block 104 is provided as part of the FR application architecture embodiment 100 for effectuating appropriate filtration with respect to incoming signaling messages (e.g., the Message Transfer Part or MTP messages of the Signaling System No. 7 Standard) on selected linksets 102 coupled to the STP node. Preferably, the network operator has the capability to provision and enable the incoming linksets on which the message filtering may be performed.

The purpose of MTP message filtering is to examine the message header contents in order to determine if the message needs to be processed by an appropriate service handler. In an exemplary embodiment, the following items are examined for this determination: (i) incoming linkset and (ii) MTP Service Information Octet (SIO). A message distributor block 106 is provided for distributing the MTP messages to one of a plurality of service handlers 108-1 through 108-N based on the message header examination, each of which includes service logic operable to query a local database via a database access system 110. By way of illustration, a plurality of databases, DB 112-1 through DB 112-K, are exemplified with respect to the FR application architecture embodiment 100 shown in FIG. 1. Further, each service handler is comprised of service-specific routing logic that is responsible for effectuating appropriate call treatment with respect to a particular incoming signaling message based on one or more results obtained from a database query operation.

As pointed out hereinabove, the TCTB service is preferably effectuated within the FR application architecture embodiment 100 by means of one of the service handlers, e.g., Call Type Blocking service handler 108-1, with respect to incoming signaling messages received on linksets that have been provisioned and enabled for the service. Whereas these signaling messages may be generated pursuant to voice or data calls originated by calling parties served by a local exchange switch, e.g., a Class 5 switch, coupled to the STP node, such signaling messages may also emanate from networks that are foreign to the network portion to which the serving STP node belongs. In either case, whether the TCTB service logic at the STP node is invoked depends on the linkset enablement and provisioning by the network operator.

In accordance with the teachings of the present invention, the TCTB service is effectuated on the basis of Call Type, which can be any communications service performed for a subscriber, e.g., local calling, long distance calling, carrier selection, automatic collect calling, international dialing, 800 and 900 services, et cetera. A controlled service is a service of particular Call Type for which the TCTB service logic is invoked in order to determine appropriate call treatment based on database query. In one implementation, each controlled service may be identified by a Service Key of a predetermined number of digits that corresponds to a specific Call Type.

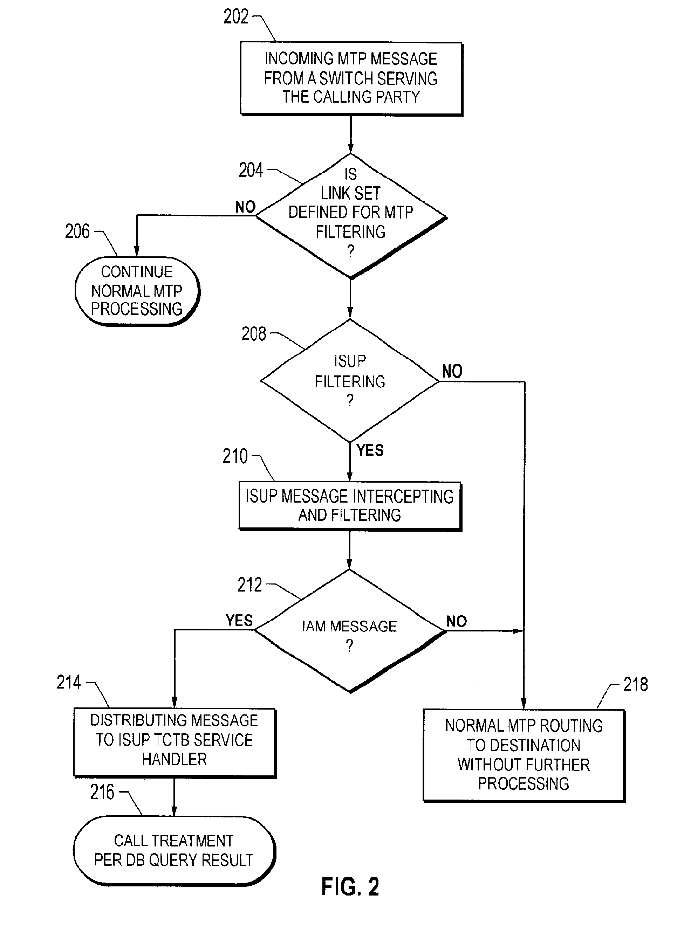

As alluded to before, the network operator has the capability to enable on which incoming linksets the message filtering is to be performed for the TCTB service. On these linksets, the MTP SIO is set to a particular SS7-compliant User Part, namely, the Integrated Services Digital Network (ISDN) User Part or ISUP. Where so enabled, the message filtration block 104 further examines the incoming messages in order to effectuate ISUP message filtering before the TCTB service handler is invoked for determining appropriate treatment. These operations are set forth in additional detail in the flow chart shown in FIG. 2, where an embodiment of the TCTB methodology of the present invention is exemplified.

Upon receiving an incoming MTP message from a switch serving a calling party (block 202), a determination is made whether the linkset on which the message is received is defined for MTP message filtering (decision block 204). If the linkset is not defined for MTP message filtering, the received MTP message undergoes normal MTP processing in accordance with standard MTP routing procedures (block 206). On the other hand, if the linkset is enabled for MTP filtering, a further examination is made (decision block 208) so as to determine if the MTP's SIO is set to "ISUP", which enables ISUP message intercepting and filtering (block 210). Otherwise, normal MTP routing process will take place (block 218).

As part of the ISUP message filtration process, a determination is made as to the received ISUP message type (decision block 212). If the intercepted ISUP message is an Initial Address Message (IAM), the message is distributed to the TCTB service handler via a message distributor (block 214). As set forth above, the TCTB service handler is operable to query a database associated with the STP based on one or more subscriber parameters contained in the message and its Call Type. By way of exemplary implementation, the subscriber parameters may comprise the E.164 directory numbers associated with the calling party (CgPN), called party (CdPN), or both. Further, the service database may include several database portions, e.g., a database portion containing Single or Ranged E.164 numbers and restrictions associated therewith on accessing predefined controlled services, et cetera. Based on a result obtained from querying the database, the service logic of the TCTB service handler determines appropriate call treatment, e.g., call termination, re-routing and the like (block 216).

On the other hand, if the intercepted message is not an IAM message, the received message undergoes normal MTP routing based on its Destination Point Code (DPC) without further processing (block 218).

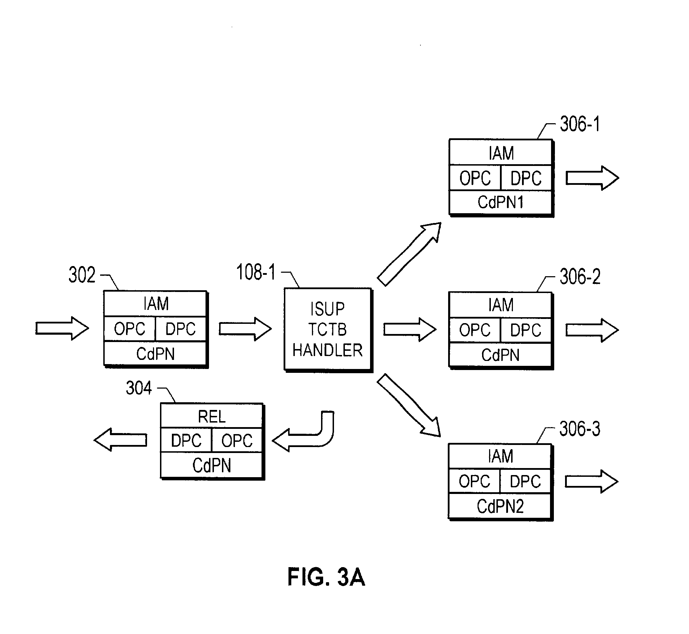

FIG. 3A depicts an exemplary embodiment of a scheme for treating an incoming signaling message 302 on a TCTB-enabled linkset in accordance with the teachings of the present invention. The signaling message 302 comprises the ISUP IAM message, an Origination Point Code (OPC), a Destination Point Code (DPC) and Called Party Number (CdPN). Service logic associated with the ISUP TCTB handler 108-1 is operable to query the TCTB database using CdPN. In one implementation, if CdPN belongs to a restricted number or range of numbers, the service logic is able to issue an ISUP Release (REL) message 304 towards the serving switch that originated the signaling message 302 so that the call may be terminated. In another implementation, the restriction profile associated with CdPN may be such that when a call is placed to that number, it may be re-routed to one or more different destinations by modifying the downstream IAM messages. Accordingly, in general, where an incoming call is modified to be treated differently, the resulting effect may be deemed as "call blocking." On the other hand, where it is determined that no restrictions are applicable, the IAM message is simply forwarded to the called party's switch. In FIG. 3A, reference numerals 306-1 through 306-3 refer to these exemplary scenarios.

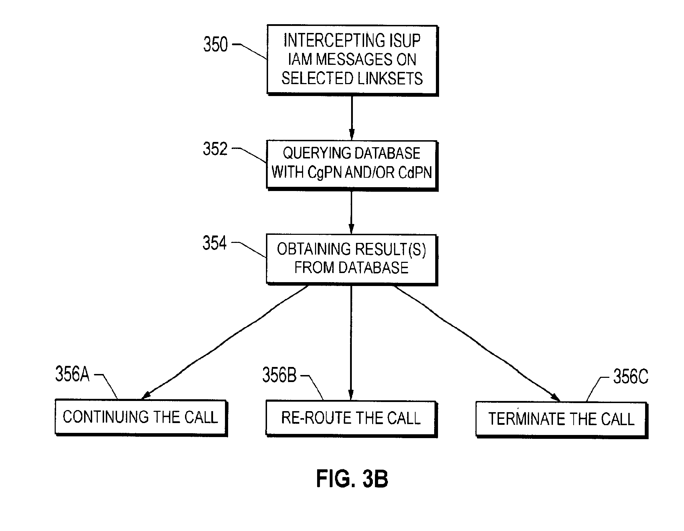

Referring now to FIG. 3B, depicted therein is a flow chart of the various operations involved in an ISUP TCTB service handling methodology of the present invention. Upon intercepting ISUP IAM messages on selected linksets (block 350), a TCTB database is queried using CgPN and/or CdPN information associated with the incoming messages generated pursuant to a controlled service (block 352). Upon obtaining a result from the local TCTB database (block 354), one or more response actions may be executed by the ISUP TCTB service handler functionality as part of its call treatment logic. As pointed out before, the call may be continued to its intended destination (block 356A), it may be re-routed to another destination (block 356B), or it may be blocked, i.e., terminated (block 356C).

As part of the FR service application architecture of an STP provided in accordance with the teachings of the present invention, the ISUP TCTB service handler may be designed to execute a number of procedures and query various databases that may be common to other service handlers of the FR application architecture, thereby eliminating redundancy. For example, the following databases may be provisioned within the FR service application architecture: Calling Line Identity Verification (CLIV) database, International Mobile Station Identity (IMSI) database, E.164 Single Number Database, E.164 Range database, Call Type Blocking (CTB) Subscriber Number database, CTB General Controlled Number database, and CTB List database, each database being deployed and provisioned to meet the specific data requirements of an individual service handler, including the ISUP TCTB service handler, or a group of handlers, within the FR service application architecture.

The CTB Subscriber Number database may be provisioned to store both single and ranges of directory numbers in accordance with the E.164 numbering plan. The purpose of this data is to restrict single and ranges of E.164 numbers (i.e., blocks of subscriber numbers, which can be called party numbers or calling party numbers) for specific Call Types (as may be defined by Service Keys). Essentially, those Call Types that are restricted for a subscriber number are provided with a Release Cause value associated with the Service Key. The CTB List database may also be provisioned to store both single and ranges of numbers that are associated with lists of restricted numbers. Th purpose of this data is to restrict access to single and ranges of numbers associated with a list ID. Two different types of lists may be provided for each controlled subscriber: system lists or custom lists. Calls to these list numbers may be treated as defined by Release Cause values associated with the Custom List ID or System List ID in the CTB Subscriber Number database. Additional details regarding the TCTB database implementation and provisioning are provided in the following commonly owned co-pending patent application(s): (i) "Triggerless Call Treatment Service Implementation in a Telecommunications Network," Application No. , filed (Attorney Docket Number: 1285-0127US), in the name(s) of: Vicente Melillo de Souza Lopes, Maureen Rose O'Toole and Ramesh K. Bhardwaj, cross-referenced hereinabove and incorporated by reference herein.

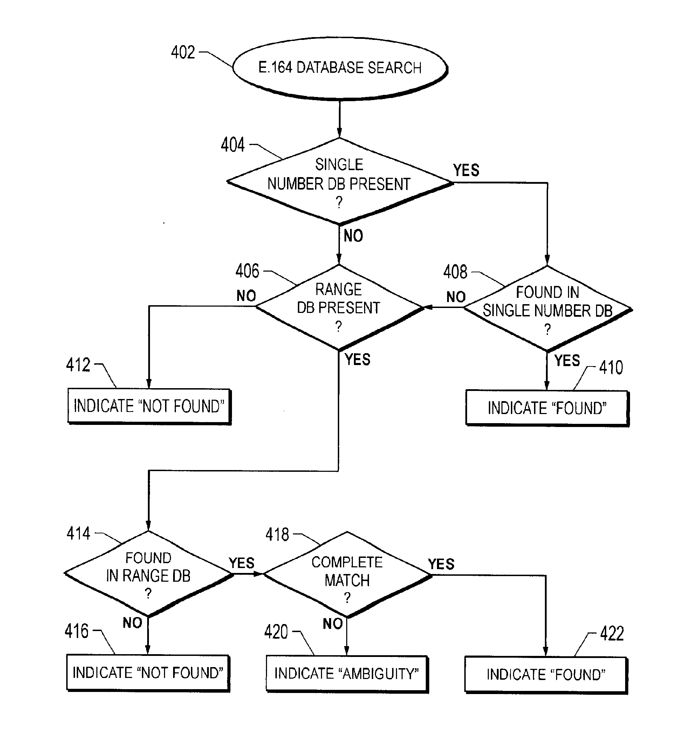

FIG. 4 depicts a flow chart of the various operations of an embodiment of an E.164 database query method for use in conjunction with a directory number search by an exemplary ISUP TCTB service handler. As those skilled in the art will appreciate, such a search may be performed for obtaining routing information with respect to the directory number. Upon launching the search algorithm (block 402), a determination is made if a Single Number database is present (decision block 404). If so, the search flow then determines if the directory number's information is found in the Single Number database (decision block 408). A "FOUND" indication is provided if a positive result is obtained from the Single Number database query (block 410).

If the directory number's information is not found in the Single Number database or if there was no Single Number database in the first place, a determination is made if an E.164 Range database is present (decision block 406). If the determination yields that no database is available, a "NOT FOUND" indication is provided (block 412). Otherwise, the search flow will continue so that a further determination is made whether the directory number's routing information is located in the E.164 Range database (decision block 414). A "NOT FOUND" indication may be provided upon obtaining a negative result (block 416). A matching determination is made to verify whether there is a complete match in the requested directory number so as to avoid ambiguity (decision block 420). If the match is complete, a "FOUND" indication is provided (block 422). Otherwise, an indication of unresolved directory number may be provided (block 420).

For each service handler, including the ISUP TCTB service handler, that is required to search the E.164 database(s), the digits that are used to search the database are usually a subset of the E.164 numbering plan. In general, these digits are only the National Significant portion of the complete, received digits. However, the complete digit stream may contain many non-National components such as an E.164 Country Code, an Inter-Network Routing Number or INRN, or an internal network identifier. It may therefore be necessary to perform a digit analysis on a received sequence of digits in order to derive the final digit subset that is used to search the E.164 database(s). In addition, an address analysis may have to be performed as part of the digit analysis to examine the type of address that was received in an incoming signaling message. This information may be contained in a signaling parameter (e.g., Nature of Address parameter) that communicates the information necessary to interpret the composition of address digits.

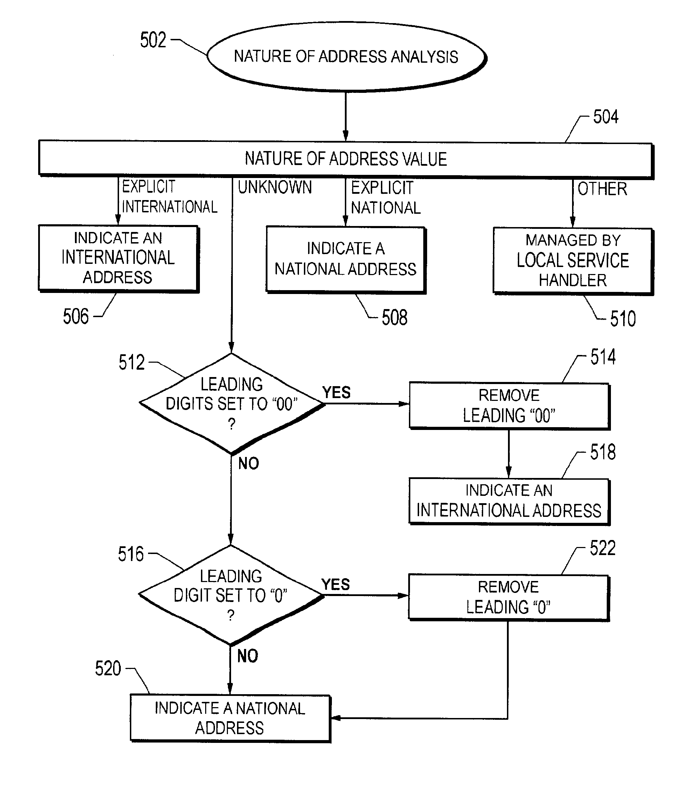

FIG. 5 depicts a flow chart of the various operations of an embodiment of an exemplary address analysis procedure for use in conjunction with an E.164 database query by the TCTB service handler. At its root, the address analysis is designed to indicate whether or not the address contains a Country Code, which is important to recognize since this Code is not used as part the E.164 database search criteria.

Upon launching the address analysis procedure (block 502), the Nature of Address parametric value of an intercepted signaling message is examined (block 504). The recognition of a Country Code contained within the received digit sequence is necessary only when the associated Nature of Address parameter for the digit sequence indicates that it is an International Number. If the Nature of Address parameter is set to "Explicit International", then an indication to that effect is provided (block 506). With the National numbers, there is no Country Code that is contained within the received address. If the Nature of Address parameter or its equivalent is set to "Explicit National", an indication that the received address is a national address may be provided (block 508). On the other hand, if the Nature of Address parameter (or its equivalent) is not one of the supported values, then it is the responsibility of the individual service handlers to determine the action taken upon receipt of messages having such unsupported addresses (block 510).

Where the Nature of Address parameter is neither explicitly international, explicitly national, nor unsupported, a further analysis may be needed to determine the nature of any implied address. A determination is first made to verify if the leading digits are set to "00" (decision block 512). If so, the leading "00" digits are removed (block 514) and an indication of an international address is provided (block 518). If there are no leading double zeros, then yet another determination is made to verify if the leading digit is set to "0" (decision block 516). If so, the leading "0" is removed (block 522) and an indication of a national address is provided (block 520), which is also the result when it is determined that the leading digit is not set to "0".

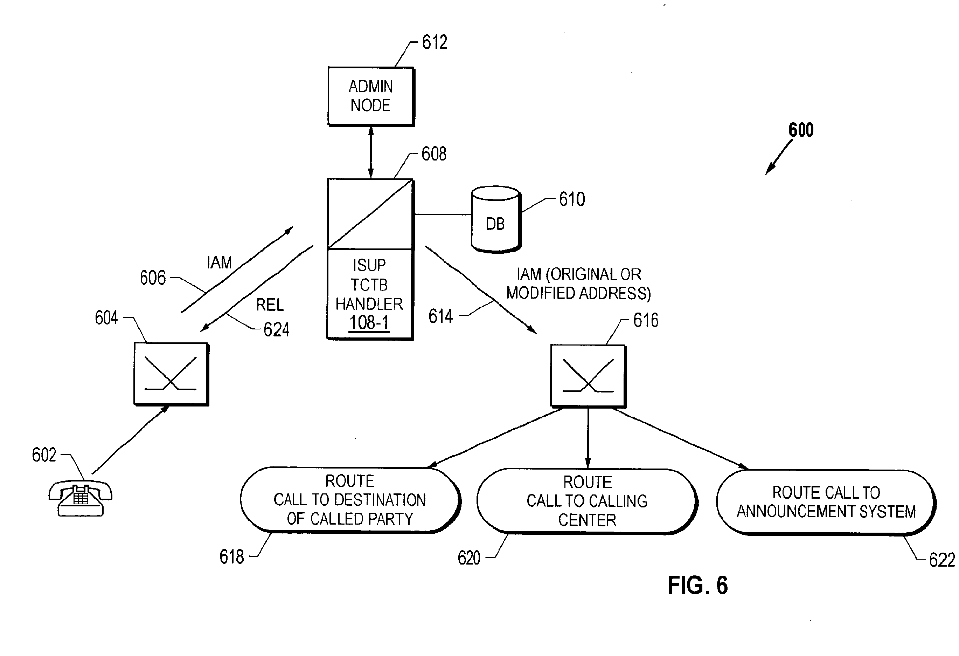

Referring now to FIG. 6, depicted therein is an exemplary embodiment of a telecommunications network portion 600 for effectuating a TCTB system and method in accordance with the teachings of the present invention. When a calling party, as exemplified by the telephony equipment 602, attempts to originate a controlled service call to a called party, a local switch 604 serving the calling party 602 generates an ISUP IAM message 606 to an STP node 608 as part of the requisite signaling during call setup. The STP node 608 is provided with the TCTB capability by means of service handler 108-1, whose database(s) 610 and service logic are provisioned by an administration (ADMIN) node 612 coupled thereto. Those skilled in the art will recognize that ADMIN node 612 and STP 608 may be coupled together via a separate network for carrying operations, administration and maintenance control traffic, and further that ADMIN node 612 may be provided with appropriate man-machine interfaces for provisioning the STP's linksets, databases, and service handlers. If the incoming IAM message 606 is received on a linkset enabled and provisioned for the TCTB service, depending on results obtained from database query by the service logic, a downstream IAM message 614 may be propagated to another switch 616. The downstream IAM message 614 may include the original or modified destination address, responsive to which the downstream switch 616 can route the call to the called party destination 618, route the call to a calling center 620, or route the call to a suitable announcement system 622. Also, if the TCTB service logic determines that the call needs to be terminated or blocked, a REL message 624 may be propagated back to the originating switch 604, which will disconnect the call.

Based upon the foregoing Detailed Description, it should be readily apparent that the present invention advantageously provides a scheme for effectuating a Triggerless Call Blocking service based on Call Types that imposes minimal impact on the existing service infrastructure. With the advanced network controls that can be provisioned within the TCTB service architecture, several benefits can be realized such as, e.g., selective network access, real-time call validation, selective call blocking (for instance, blocking calls from subscribers in debt), filtering of calls to illegal destinations, et cetera.

It is believed that the operation and construction of the present invention will be apparent from the foregoing Detailed Description. While one or more of the exemplary embodiments of the invention shown and described have been characterized as being preferred, it should be readily understood that various changes and modifications could be made therein without departing from the scope of the present invention as set forth in the following claims.

## Claims

1. A flexible routing application system associated with a Signal Transfer Point (STP) (608) for effectuating a Triggerless Call Type Blocking (TCTB) service in a telecommunications network, comprising:
a message filter (104) operating to intercept incoming Message Transfer Part (MTP) messages (102), said message filter (104) for examining message headers associated with said MTP messages (102) in order to determine if a particular message requires a service handler;
a message distributor (106) operating to distribute a particular MTP message to a TCTB service handler (108-1) upon determining that said particular MTP message is received on a linkset enabled for said TCTB service;
a database (112-1 through 112-K) operable to be queried by said TCTB service handler (108-1) based on a subscriber number parameter associated with said particular MTP message; and
service logic provided with said TCTB service handler (108-1) for effectuating call treatment with respect to said particular MTP message based on a result obtained from said database (112-1 through 112-K) responsive to a querying operation.

2. The flexible routing application system associated with an STP (608) for effectuating a TCTB service in a telecommunications network as set forth in claim 1, wherein said service logic is operable to effectuate one of call re-routing, call termination, and call continuation based on a result obtained from said database (112-1 through 112-K).

3. A Triggerless Call Type Blocking (TCTB) method in a telecommunications network, comprising:
intercepting an incoming signaling message (606) received at a Signal Transfer Point (STP) (608) on a selected linkset, wherein said incoming signaling message (606) is generated pursuant to a call originated by a calling party (602) towards a called party;
querying a database (610) associated with said STP (608) based on a parameter contained in said incoming signaling message (606); and
treating said call by said STP (608) depending on a result obtained from said database (610) responsive to said querying operation.

4. The TCTB method in a telecommunications network as set forth in claim 3, wherein said database (610) is integrated with said STP (608).

5. The TCTB method in a telecommunications network as set forth in claim 3 or claim 4, wherein said parameter contained in said incoming signaling message (606) comprises a directory number associated with said calling party.

6. The TCTB method in a telecommunications network as set forth in claim 3 or claim 4, wherein said parameter contained in said incoming signaling message (606) comprises a directory number associated with said called party.

7. The TCTB method in a telecommunications network as set forth in claim 3, claim 4, claim 5 or claim 6, wherein said call is continued to said called party.

8. The TCTB method in a telecommunications network as set forth in claim 3, claim 4, claim 5 or claim 6, wherein said call is re-routed to another destination.

9. The TCTB method in a telecommunications network as set forth in claim 3, claim 4, claim 5 or claim 6, wherein said call is terminated.

10. The TCTB method in a telecommunications network as set forth in claim 3, claim 4, claim 5, claim 6, claim 7, claim 8 or claim 9, wherein said call is originated in a network portion other than a network portion native to said STP (608).
